(19) Europäisches Patentamt
European Patent Office
Office européen des brevets

(11) Veröffentlichungsnummer : **0 083 018**
**B1**

(12) # EUROPÄISCHE PATENTSCHRIFT

(45) Veröffentlichungstag der Patentschrift : **05.03.86**

(51) Int. Cl.[4] : **C 07 F 7/18**, C 07 F 7/12, C 08 F 4/16// C08F283/02

(21) Anmeldenummer : **82111536.7**

(22) Anmeldetag : **13.12.82**

(54) **Neue Silylether, Verfahren zu ihrer Herstellung und ihre Verwendung als Polymerisationsinitiatoren.**

(30) Priorität : **24.12.81 DE 3151444**

(43) Veröffentlichungstag der Anmeldung : **06.07.83 Patentblatt 83/27**

(45) Bekanntmachung des Hinweises auf die Patenterteilung : **05.03.86 Patentblatt 86/10**

(84) Benannte Vertragsstaaten : **AT BE CH DE FR GB IT LI NL**

(56) Entgegenhaltungen :
**DE-A- 2 131 623**
**DE-A- 2 164 482**
**FR-A- 2 163 874**
**Römpp's Chemielexikon, 1979, Stichworte "Aryl, "Aromaten"**

(73) Patentinhaber : **BAYER AG**
***Konzernverwaltung RP Patentabteilung***
**D-5090 Leverkusen 1 Bayerwerk (DE)**

(72) Erfinder : **Reuter, Knud, Dr.**
**Buschstrasse 149**
**D-4150 Krefeld (DE)**
Erfinder : **Dhein, Rolf, Dr.**
**Deswatinesstrasse 30**
**D-4150 Krefeld (DE)**

**EP 0 083 018 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die vorliegende Erfindung betrifft neue Silylether, die durch Umsetzung von Arylsilylketonen mit unedlen Metallen und Mono-, Di- oder Trichlorsilanen oder Tetrachlorsilan erhältlich sind, ein Verfahren zu ihrer Herstellung und ihre Verwendung als Initiatoren für radikalisch initiierbare Polymerisationsreaktionen.

Wegen der bekannten Gefahren Peroxidgruppen-haltiger Polymerisationsinitiatoren hat man bereits 1.1.2.2-Tetraaryl-1,2-dihydroxyethane, ihre Alkyl- und Silylether als Initiatoren für thermisch initiierbare radikalische Polymerisationen vorgeschlagen (DE-AS 1 216 877, 1 219 224, DE-OS 2 131 623, 2 164 482). Ebenso sind Initiatoren vom Typ der 1,2-Diaryl-1,2-dicyano-1,2-dihalogenethane (DE-OS 2 444 252), der 1,2-Diaryl-1,1,2,2-tetracarbalkoxyethane (US-PS 3 896 099) und der 1,2-Diaryl-1,1,2,2-tetramethyl-ethane mit teilweise chlorierten Methylgruppen (BE-PS 834 599) bekannt. Auch die Lehre, daß sich Silylether von Oligomeren, welche wiederkehrende Einheiten der Struktur.

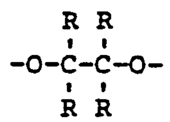 (I)

wobei R Phenyl oder Alkyl bedeutet, enthalten, zur Initiierung von Polymerisationsreaktionen eignen, zählt zum Stand der Technik (DE-OS 2 632 294, 2 656 782).

Weiterhin ist die Verwendung bestimmter substituierter Weinsäureester als Radikalstarter für Polymerisationen bekannt (DE-OS 2 853 938, 2 909 951).

Es bestand ein Bedarf an Peroxidgruppen-freien Initiatoren, die bei Raumtemperatur in den zu polymerisierenden Verbindungen oder Gemischen lagerstabil sind, bei höheren Temperaturen die bekannten Peroxid-freien Initiatoren bei möglichst geringer Konzentration im polymerisationsfähigen System an Reaktivität noch übertreffen und gut durchgehärtete Produkte möglichst geringer Eigenfärbung liefern.

Überraschenderweise wurde nun gefunden, daß die nachfolgend definierten Silylether von 1,2-Diaryl-1,2-disilylethan-1,2-diolen diesen Forderungen entsprechen.

Zudem besitzen sie den Vorteil, beim Zerfall in Radikale keine flüchtigen Bruchstücke freizusetzen, die im Polymerisat eine unerwünschte Blasenbildung hervorrufen könnten.

Gegenstand der Erfindung sind monomere und oligomere Silylether mit der Teilstruktur

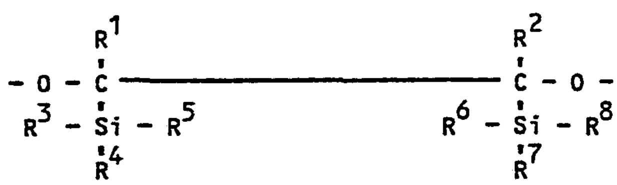 (II)

und einem Molekulargewicht, als Zahlenmittel bestimmt, von 500 bis 12 000, worin

$R^1$, $R^2$ gegebenenfalls durch Methoxy, Chlor oder Fluor substituierte Arylreste mit 6 bis 12 C-Atomen und

$R^3$ bis $R^8$ unabhängig voneinander Methyl, Ethyl, Phenyl oder Benzyl bedeuten, die dadurch erhältlich sind, daß man 1 Mol Arylsilylketone der Formeln

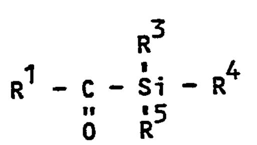 und 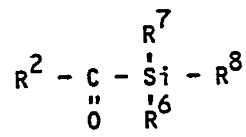

(III) (IV)

sowie 0,5 Grammatom Magnesium oder Calcium oder 1 Grammatom Lithium, Natrium oder Kalium, in einem inerten aprotischen Lösungsmittel bei − 10 bis + 70 °C — sofern notwendig unter Kühlung — mit 1 Mol eines Monochlororganosilans der Formel

$$R^9R^{10}R^{11}SiCl \qquad (V)$$

oder mit 0,4-0,8 Mol eines Dichlororganosilans der Formel

$$R^9R^{10}SiCl_2 \quad (VI)$$

oder mit 0,25-0,6 Mol eines Trichlororganosilans der Formel

$$R^9SiCl_3 \quad (VII)$$

oder mit 0,1-0,7 Mol Tetrachlorsilan solange umsetzt, bis die exotherme Reaktion beendet ist, hydrolysiert, die organische Phase abtrennt und das Lösungsmittel bei einem Druck zwischen 2,6 und 8 mbar abzieht, wobei

$R^9$ Methyl, Ethyl, Phenyl, Benzyl, Chlormethyl oder A,
$R^{10}$ Hydroxyl, Methoxy, Ethoxy oder $R^9$
$R^{11}$ Hydroxyl oder $R^9$ und
A einen Rest der Formel

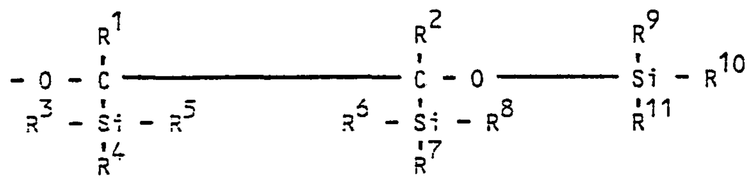

bedeuten.

Ein weiterer Gegenstand der Erfindung ist die Herstellung der Silylether II nach der Arbeitsweise der Verfahrensansprüche.

Weiterer Gegenstand der Erfindung ist die Verwendung der erfindungsgemäßen Silylether II als Initiatoren für radikalisch initiierbare Polymerisationsreaktionen.

Die erfindungsgemäßen Silylether weisen ein als Zahlenmittel bestimmtes Molekulargewicht von 500-12 000, vorzugsweise von 2 000-8 000 auf. Sie enthalten die Teilstruktur (II) in der Regel 1- bis 20mal.

$R^1$ und $R^2$ bedeuten vorzugsweise Phenyl, Tolyl, p-tert.-Butylphenyl, o- und p-Chlorphenyl, 2,4-Dichlorphenyl, Naphthyl, Biphenylyl, m-Methoxyphenyl.

Das Molekulargewicht der erfindungsgemäßen Silylether wird bis zu einem Molekulargewicht von 3 000 dampfdruckosmometrisch, bei einem Molekulargewicht oberhalb 3 000 membranosmometrisch, jeweils in Aceton als Lösungsmittel, bestimmt. Die Molekulargewichte einzelner Fraktionen der erfindungsgemäßen Reaktionsgemische lassen sich gelchromatographisch (mittels Eichsubstanzen) bestimmen.

Als Beispiele für die als Ausgangsmaterialien vorzugsweise zu verwendenden Kombinationen werden im folgenden verschiedene Reaktionspartner aufgeführt:

| | | |
|---|---|---|
| 1) Magnesium | Benzoyltrimethylsilan | Chlortrimethylsilan |
| 2) Magnesium | Benzoyltriphenylsilan | Chlortrimethylsilan |
| 3) Magnesium | Benzoyltrimethylsilan | Dichlordimethylsilan |
| 4) Natrium | Benzoyltrimethylsilan | Chlortrimethylsilan |
| 5) Lithium | Benzoyltrimethylsilan | Trichlormethylsilan |
| 6) Magnesium | Benzoyltrimethylsilan | Trichlormethylsilan |
| 7) Magnesium | Benzoyltriphenylsilan | Dichlordimethylsilan |
| 8) Magnesium | Benzoyldimethylphenylsilan | Chlortrimethylsilan |
| 9) Magnesium | 4-Methylbenzoyltrimethylsilan | Chlortrimethylsilan |
| 10) Magnesium | 3-Methylbenzoylmethylsilan | Chlortrimethylsilan |
| 11) Kalium | 2-Methylbenzoyltrimethylsilan | Dichlordimethylsilan |
| 12) Calcium | Benzoyltriphenylsilan | Dichlordimethylsilan |
| 13) Magnesium | Benzoyltrimethylsilan | Tetrachlorsilan |
| 14) Aluminium | Benzoyltriphenylsilan | Tetrachlorsilan |
| 15) Magnesium | Benzoyldimethylphenylsilan | Trichlormethylsilan |
| 16) Natrium | 4-Chlorbenzoyltrimethylsilan | Chlortrimethylsilan |
| 17) Magnesium | 2-Chlorbenzoyltrimethylsilan | Dichlordimethylsilan |
| 18) Magnesium | Benzoyltriethylsilan | Chlortrimethylsilan |

Inerte aprotische Lösungsmittel sind z. B. Aromaten und Alkylaromaten wie Benzol und Toluol, Ether wie Diethylether, Diisopropylether, Dibutylether, Anisol, Tetrahydrofuran, Dioxan, 1,2-Dimethoxyethan, Trialkylphosphate, wie Triethylphosphat, Tributylphosphat; N,N-disubstituierte Amide wie Dimethylformamid, N,N-Dimethylacetamid und Phosphorsäuretris-(dimethylamid). Weitere geeignete Lösungsmittel sind in Methoden der Organischen Chemie (Houben-Weyl), Band XIII/2a, S. 59-70, Georg Thieme-Verlag, Stuttgart 1973, beschrieben. Als besonders geeignet erwiesen sich Lösungsmittelgemische aus 0-80 Gew.-Teilen Benzol oder Toluol, 2-98 Gew.-Teilen Tetrahydrofuran und 2-98 Gew.-Teilen

Triethylphosphat oder Phosphorsäuretris-(dimethylamid). Um das Reaktionsgemisch nicht unnötig zu verdünnen, wird im allgemeinen möglichst wenig Lösungsmittel eingesetzt. In der Regel ist ein Arylsilylketon/Lösungsmittel-Gewichtsverhältnis von 1 : 1 vollkommen ausreichend.

Es empfiehlt sich zu berücksichtigen, daß unter den Reaktionsbedingungen schon teilweise Zersetzung möglich ist. Falls also das erfindungsgemäße Reaktionsgemisch geringe Reaktivität aufweisen sollte, die auf eine Zersetzung der als Initiator wirksamen Verbindungen während der Herstellung zurückzuführen ist, empfiehlt sich eine Herabsetzung der Reaktionstemperatur.

Die erfindungsgemäßen Reaktionsgemische sind teilweise bereits bei Temperaturen oberhalb 40 °C wirksam. Eine vollständige und rasche Durchhärtung wird in der Regel bei Einsatz von 0,02 bis 1, vorzugsweise 0,05 bis 0,8 Gew.-%, bezogen auf die zu polymerisierende Substanz, erreicht.

Der Beginn der Polymerisationsreaktion wird durch Erhitzen einer Mischung aus zu polymerisierender Substanz und erfindungsgemäßer Reaktionsmischung über eine konkrete, im Einzelfall leicht zu bestimmende Anspringtemperatur erreicht. Die Härtung radikalisch polymerisierbarer Systeme erfolgt in der Regel zwischen 60 und 200 °C.

Die Härtung kann in einem Zuge, falls erwünscht aber auch stufenweise, erfolgen (vgl. GB-PS 1 041 641).

Es ist möglich, durch eine einfache Farbreaktion die Anspringtemperatur der erfindungsgemäßen Initatorreaktionsmischungen festzustellen : Die bei der thermischen Zersetzung entstehenden Radikale können nämlich chinoide Farbstoffe entfärben. Zur Durchführung des Tests löst man eine geringe Menge chinoiden Farbstoffs, z. B. Methylenblau, Thionin oder Neutralrot, in einem Lösungsmittel, das frei von molekularem Sauerstoff ist, z. B. Glykol, Xylol, und setzt eine mindestens äquivalente Menge der erfindungsgemäßen Reaktionsmischung zu. Die Temperatur, bei der der Farbstoff entfärbt wird, ist die Anspringtemperatur der Initiator-Reaktionsmischung.

Als Substanzen, deren Polymerisation durch die erfindungsgemäßen Reaktionsgemische initiiert werden kann, kommen alle radikalisch polymerisierbaren Verbindungen oder Gemische in Betracht, z. B. also konjugierte Diene wie Butadien, Isopren, Chloropren ; Vinylchlorid, Vinyliden chlorid ; aromatische Vinylverbindungen wie Styrol, Divinylbenzol ; Vinylester, wie Vinylpropylether, Vinylisobutylether ; Acrylsäure und Methacrylsäure und deren Derivate wie Ester, insbesondere mit aliphatischen Alkoholen mit 1 bis 5 C-Atomen, Nitrile, Amide ; Di(vinylphenyl)carbonate ; Diallylphthalat, Diallylcarbonat, Diallylfumarat ; Di(allylphenyl)-carbonate ; Polyol-poly-(meth)acrylate ; N,N'-Methylenbis(meth)acrylamid.

Besonders geeignete Substanzen für die Polymerisationsinitiierung mit den erfindungsgemäß zu verwendenden Reaktionsgemischen sind ungesättigte Polyesterharze, d. h. die Lösungen α,β-ethylenisch ungesättrigte Polyester in damit copolymerisierbaren Monomeren.

Geeignet α,β-ethylenisch ungesättigte Polyester sind die üblichen Polykondensationsprodukte mindestens einer α,β-ethylenisch ungesättigten Dicarbonsäure mit in der Regel 4 oder 5 C-Atomen oder deren esterbildenden Derivate, z. B. ihren Anhydriden, gegebenenfalls in Abmischung mit bis zu 200 Mol-%, bezogen auf die ungesättigten Säurekomponenten, mindestens einer aliphatischen gesättigten Dicarbonsäure mit 4-10 C-Atomen oder deren esterbildenden Derivate mit mindestens einer Polyhydroxyverbindung, insbesondere Dihydroxyverbindung, mit 2-8 C-Atomen — also Polyester, wie sie bei J. Björksten et al., « Polyesters and their Applications », Reinhold Publishing Corp., New York 1956, beschrieben sind.

Beispiele für bevorzugt zu verwendende ungesättigte Dicarbonsäuren oder ihre Derivate sind Maleinsäure oder Maleinsäureanhydrid und Fumarsäure. Verwendet werden können z. B. jedoch auch Mesaconsäure, Citraconsäure, Itaconsäure oder Chlormaleinsäure. Beispiele für die zu verwendenden aliphatischen gesättigten, cycloaliphatischen und aromatischen Dicarbonsäuren oder ihre Derivate sind Phthalsäure oder Phthalsäureanhydrid, Isophthalsäure, Terephthalsäure, Hexa- oder Tetrahydrophthalsäure bzw. deren Anhydride, Endomethylentetrahydrophthalsäure oder deren Anhydrid, Bernsteinsäure bzw. Bernsteinsäureanhydrid und Bernsteinsäureester und -chloride, Adipinsäure, Sebacinsäure. Um schwerentflammbare Harze herzustellen, können z. B. Hexachlorendomethylentetrahydrophthalsäure, Tetrachlorphthalsäure oder Tetrabromphthalsäure verwendet werden. Als zweiwertige Alkohole können Ethylenglykol, Propandiol-1,2, Propandiol-1,3, Diethylenglykol, Dipropylenglykol, Butandiol-1,3, Butandiol-1,4, Neopentylglykol, Hexandiol-1,6, 2,2-Bis-(4-hydroxycyclohexyl)-propan, bis-oxalkyliertes Bisphenol und andere eingesetzt werden. Bevorzugt verwendet werden Ethylenglykol, Propandiol-1,2, Diethylenglykol und Dipropylenglykol.

Weitere Modifikationen sind möglich durch Einbau ein-, drei- und vierwertiger Alkohole mit 1-6 C-Atomen, wie Methanol, Ethanol, Butanol, Allylalkohol, Benzylalkohol, Cyclohexanol und Tetrahydrofurfurylalkohol, Trimethylpropan, Glycerin und Pentaerythrit sowie von Mono-, Di- und Triallylethern und Benzylethern drei- und mehrwertiger Alkohole mit 3-6 C-Atomen gemäß DE-AS 1 024 654, sowie durch Einbau einbasischer Säuren wie Benzoesäure, oder langkettiger ungesättigter Fettsäuren wie Ölsäure, Leinölfettsäure und Ricinenfettsäure.

Die Säurezahlen der Polyester liegen gewöhnlich zwischen 1 und 100, vorzugsweise zwischen 20 und 70, die OH-Zahlen zwischen 10 und 150, vorzugsweise zwischen 20 und 100, und die als Zahlenmittel bestimmten Molekulargewichte $\bar{M}_n$ zwischen ca. 500 und 5 000, vorzugsweise zwischen ca. 1 000 und 3 000 (dampfdruckosmometrisch gemessen in Dioxan und Aceton ; bei differierenden Werten wird der niedrigere als der korrekte angesehen).

Als mit den ungesättigten Polyestern copolymerisierbare Vinyl- und Vinylidenverbindungen eignen sich in der Polyestertechnologie gebräuchliche ungesättigte Verbindungen, die bevorzugt α-substituierte Vinylgruppen oder β-substituierte Allylgruppen tragen, bevorzugt Styrol ; aber auch beispielsweise kernchlorierte und -alkylierte bzw. -alkenylierte Styrole, wobei die Alkylgruppen 1-4 Kohlenstoffatome enthalten können, z. B. Vinyltoluol, Divinylbenzol, α-Methylstyrol, tert.-Butylstyrol, Chlorstyrole ; Vinylester von Carbonsäuren mit 2-6 Kohlenstoffatomen, bevorzugt Vinylacetat ; Vinylpyridin, Vinylnaphthalin, Vinylcyclohexan, Acrylsäure und Methacrylsäure und/oder ihre Ester (vorzugsweise Vinyl-, Allyl- und Methallylester) mit 1-4 Kohlenstoffatomen in der Alkoholkomponente, ihre Amide und Nitrile, Maleinsäureanhydrid, -halb- und -diester mit 1-4 Kohlenstoffatomen in der Alkoholkomponente, -halb- und -diamide oder cyclische Imide wie N-Methylmaleinimid oder N-Cyclohexylmaleinimid ; Allylverbindungen wie Allylbenzol und Allylester wie Allylacetat, Phthalsäurediallylester, Isophthalsäurediallylester, Fumarsäurediallylester, Allylcarbonate, Diallylcarbonat, Triallylphosphat und Triallylcyanurat.

Im folgenden angegebene Teile sind Gewichtsteile, Prozentangaben erfolgen als Gewichtsprozente.

## Beispiel 1

17,8 g Benzoyltrimethylsilan (0,1 Mol) und 1,3 g Magnesium (0,053 Mol) werden zu einer wasserfreien Mischung aus 50 g Triethylphosphat und 50 g Toluol gegeben. Bei 30 °C werden 10,9 g Chlortrimethylsilan (0,1 Mol) zugetropft, und die Mischung wird bis zur vollständigen Umsetzung des Magnesiums bei 30-35 °C gerührt. Das ausreagierte Gemisch wird in 100 ml Eiswasser gegeben, die wäßrige Phase entfernt und die organische Phase gründlich mit Wasser gewaschen. Das Toluol wird im Vakuum entfernt. Aus dem Rückstand kristallisieren nach und nach 5,04 g 1,2-Bis-(trimethylsilyl)-1,2-bis-(trimethylsiloxy)-1,2-diphenylethan, Fp. 132°-133° (aus Methanol).

## Beispiel 2

Ein ungesättigtes Polyesterharz, hergestellt aus 11 Teilen Phthalsäureanhydrid, 47 Teilen Maleinsäureanhydrid und 42 Teilen Propylenglykol-1,2 bei 200 °C (Säurezahl 20, OH-Zahl 30, Viskosität bei 20 °C : 1 500 cP), wird 66 ig in Styrol gelöst, mit 0,01 % Hydrochinon stabilisiert und mit 0,7 % des Initiators aus Beispiel 1 gemischt.

Eine Stunde nach der Zugabe des Initiators werden 20 g eines Harzansatzes in ein Reagenzglas von 16 mm Durchmesser gefüllt. Ein Eisen-Konstantan-Thermoelement, das mit einem Temperatur-Zeit-Schreiber verbunden ist, wirf 3 cm tief in das Harz eingetaucht und das zu 8 cm gefüllte Reagenzglas nach dem Einschalten des Meßgerätes in ein thermostatisiertes Ölbad gestellt. Analog DIN 16 945 werden die Härtungszeiten $t_H$ (Zeit bis zum Erreichen der Spitzentemperatur minus Zeit bis zum Überschreiten der 65 °C-Linie) und die Spitzentemperatur ($t_m$) bestimmt.

Bei den angegebenen Badtemperaturen ergeben sich folgende Werte :

| | $t_H$ (min) | $t_m$ (°C) |
|---|---|---|
| Badtemperatur (°C) | | |
| 80 | 14 | 205 |
| 90 | 11 | 220 |
| 100 | 7,5 | 245 |

Die gehärteten Massen sind praktisch farblos.

**Patentansprüche** (für die Vertragsstaaten : BE, CH, DE, FR, GB, IT, LI, NL)

1. Monomere und oligomere Silylether mit der Teilstruktur

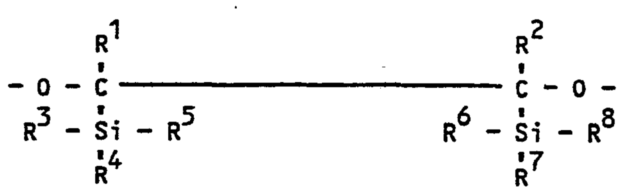

(II)

und einem Molekulargewicht, als Zahlenmittel bestimmt, von 500 bis 12 000, worin

$R^1$, $R^2$ gegebenenfalls durch Methoxy, Chlor oder Fluor substituierte Arylreste mit 6 bis 12 C-Atomen und

$R^3$ bis $R^8$ unabhängig voreinander Methyl, Ethyl, Phenyl oder Benzyl bedeuten, dadurch erhältlich, daß man 1 Mol Arylsilylketone der Formeln

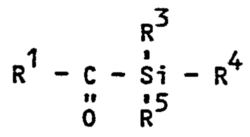

und

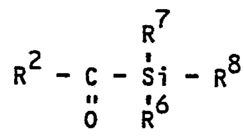

(III) (IV)

sowie 0,5 Grammatom Magnesium oder Calcium oder 1 Grammatom Lithium, Natrium oder Kalium, in einem inerten aprotischen Lösungsmittel bei – 10 bis + 70 °C — sofern notwendig unter Kühlung — mit 1 Mol eines Monochlororganosilans der Formel

$$R^9R^{10}R^{11}SiCl \qquad (V)$$

oder mit 0,4-0,8 Mol eines Dichlororganosilans der Formel

$$R^9R^{10}SiCl_2 \qquad (VI)$$

oder mit 0,25-0,6 Mol eines Trichlororganosilans der Formel

$$R^9SiCl_3 \qquad (VII)$$

oder mit 0,1-0,7 Mol Tetrachlorsilan solange umsetzt, bis die exotherme Reaktion beendet ist, hydrolysiert, die organische Phase abtrennt und das Lösungsmittel bei einem Druck zwischen 2,6 und 8 mbar abzieht, wobei

$R^9$ Methyl, Ethyl, Phenyl, Benzyl, Chlormethyl oder A,
$R^{10}$ Hydroxyl, Methoxy, Ethoxy oder $R^9$
$R^{11}$ Hydroxyl oder $R^9$ und
A einen Rest der Formel

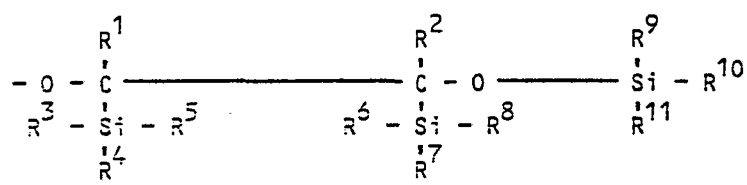

bedeuten.

2. Silylether nach Anspruch 1, dadurch gekennzeichnet, daß die Arylreste $R^1$ bzw. $R^2$ methylsubstituiert sind.

3. Silylether nach Anspruch 1 und 2, dadurch gekennzeichnet, daß $R^1$ bzw. $R^2$ Phenyl-, Tolyl-, p-tert.-Butylphenyl-, o- oder p-Chlorphenyl-, 2,4-Dichlorphenyl-, Naphthyl-, Biphenylyl- oder m-Methoxyphenylreste bedeuten.

4. Silylether nach Anspruch 1 dadurch gekennzeichnet, daß die Umsetzung der Arylsilylketone III und IV bei – 5 bis + 50 °C stattfindet.

5. Silylether nach Anspruch 1, dadurch gekennzeichnet, daß pro Mol der Arylsilylketone III und IV 0,5 bis 0,6 Mol Dichlororganosilan VI oder 0,3 bis 0,4 Mol Trichlororganosilan VII eingesetzt werden.

6. Verwendung der Silylether nach Anspruch 1-5 als Initiatoren für radikalisch initiierbare Polymerisationsreaktionen.

**Patentansprüche** (für den Vertragsstaat AT)

1. Verfahren zur Herstellung monomere und oligomere Silylether mit der Teilstruktur

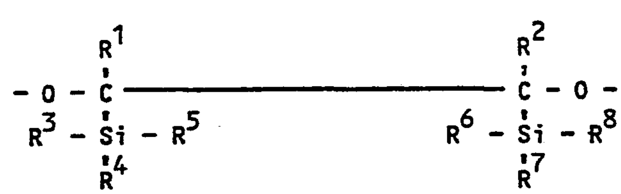

(II)

und einem Molekulargewicht, als Zahlenmittel bestimmt, von 500 bis 12 000, worin

$R^1$, $R^2$ gegebenenfalls durch Methoxy, Chlor oder Fluor substituierte Arylreste mit 6 bis 12 C-Atomen und

$R^3$ bis $R^8$ unabhängig voneinander Methyl, Ethyl, Phenyl oder Benzyl bedeuten, dadurch gekennzeichnet, daß man 1 Mol Arylsilylketone der Formeln

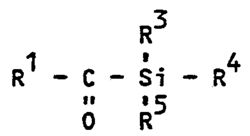

und

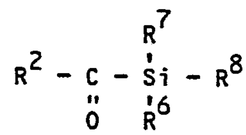

(III) (IV)

sowie 0,5 Grammatom Magnesium oder Calcium oder 1 Grammatom Lithium, Natrium oder Kalium, in einem inerten aprotischen Lösungsmittel bei – 10 bis + 70 °C — sofern notwendig unter Kühlung — mit 1 Mol eines Monochlororganosilans der Formel

$$R^9R^{10}R^{11}SiCl \quad (V)$$

oder mit 0,4-0,8 Mol eines Dichlororganosilans der Formel

$$R^9R^{10}SiCl_2 \quad (VI)$$

oder mit 0,25-0,6 Mol eines Trichlororganosilans der Formel

$$R^9SiCl_3 \quad (VII)$$

oder mit 0,1-0,7 Mol Tetrachlorsilan solange umsetzt, bis die exotherme Reaktion beendet ist, hydrolysiert, die organische Phase abtrennt und das Lösungsmittel bei einem Druck zwischen 2,6 und 8 mbar abzieht, wobei

$R^9$ Methyl, Ethyl, Phenyl, Benzyl, Chlormethyl oder A,

$R^{10}$ Hydroxyl, Methoxy, Ethoxy oder $R^9$

$R^{11}$ Hydroxyl oder $R^9$ und

A einen Rest der Formel

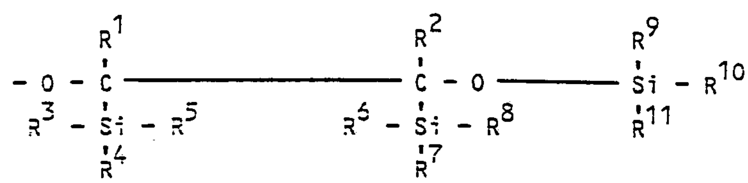

bedeuten.

2. Verfahren nach Anspruch 1, dadurch gekennzeichnet, daß die Arylreste $R^1$ bzw. $R^2$ methylsubstituiert sind.

3. Verfahren nach Anspruch 1 und 2, dadurch gekennzeichnet, daß $R^1$ bzw. $R^2$ Phenyl-, Tolyl-, p-tert.-Butylphenyl-, o- oder p-Chlorphenyl-, 2,4-Dichlorphenyl-, Naphthyl-, Biphenylyl- oder m-Methoxyphenylreste bedeuten.

4. Verfahren nach Anspruch 1 dadurch gekennzeichnet, daß die Umsetzung der Arylsilylketone III und IV bei – 5 bis + 50 °C stattfindet.

5. Verfahren nach Anspruch 1, dadurch gekennzeichnet, daß pro Mol der Arylsilylketone III und IV 0,5 bis 0,6 Mol Dichlororganosilan VI oder 0,3 bis 0,4 Mol Trichlororganosilan VII eingesetzt werden.

6. Verwendung der nach den Verfahren der Ansprüche 1-5 erhältlichen Silylether als Initiatoren für radikalisch initiierbare Polymerisationsreaktionen.

**Claims** (for the Contracting States : BE, CH, DE, FR, GB, IT, LI, NL)

1. Monomeric and oligomeric silyl ethers containing the partial structure

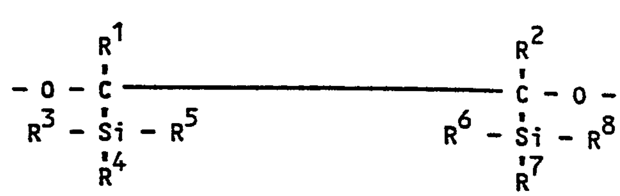

(II)

and having a molecular weight, determined as a number average, of 500 to 12,000, wherein

$R^1$ and $R^2$ denote optionally methoxy-, chlorine- or fluorine-substituted aryl radicals with 6 to 12 C atoms and

$R^3$ to $R^8$ independently of one another denote methyl, ethyl, phenyl or benzyl, obtainable by reacting 1 mole of aryl silyl ketones of the formulae

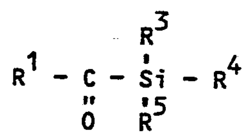

(III)

and

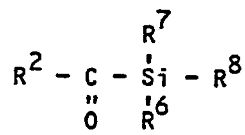

(IV)

and 0.5 gram atom of magnesium or calcium or 1 gram atom of lithium, sodium or potassium, in an inert aprotic solvent at − 10 to + 70 °C — if necessary while cooling — with 1 mole of a monochloroorganosilane of the formula

$$R^9R^{10}R^{11}SiCl \quad (V)$$

or with 0.4-0.8 mole of a dichloroorganosilane of the formula

$$R^9R^{10}SiCl_2 \quad (VI)$$

or with 0.25-0.6 mole of a trichloroorganosilane of the formula

$$R^9SiCl_3 \quad (VII)$$

or with 0.1-0.7 mole of tetrachlorosilane until the exothermic reaction has ceased, the reaction product is hydrolysed, the organic phase is separated off and the solvent is removed under a pressure of between 2.6 and 8 mbar, wherein

$R^9$ denotes methyl, ethyl, phenyl, benzyl, chloromethyl or A,

$R^{10}$ denotes hydroxyl, methoxy, ethoxy or $R^9$,

$R^{11}$ denotes hydroxyl or $R^9$ and

A denotes a radical of the formula

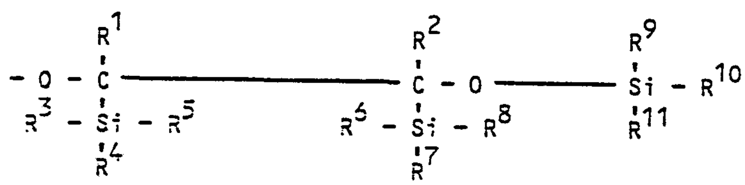

2. Silyl ethers according to Claim 1, characterised in that the aryl radicals $R^1$ and $R^2$ are methyl-substituted.

3. Silyl ethers according to Claim 1 and 2, characterised in that $R^1$ and $R^2$ denote phenyl, tolyl, p-tert.-butylphenyl, o- or p-chlorophenyl, 2,4-dichlorophenyl, naphthyl, biphenylyl or m-methoxyphenyl radicals.

4. Silyl ethers according to Claim 1, characterised in that the reaction of the aryl silyl ketones III and IV is carried out at − 5 to + 50 °C.

5. Silyl ethers according to Claim 1, characterised in that 0.5 to 0.6 mole of dichloroorganosilane VI or 0.3 to 0.4 mole of trichloroorganosilane VII are used per mole of the aryl silyl ketones III and IV.

6. Use of the silyl ethers according to Claim 1-5 as initiators for polymerisation reactions which can be initiated by radicals.

**Claims** (for the Contracting State AT)

1. Process for the production of monomeric and oligomeric silyl ethers containing the partial structure

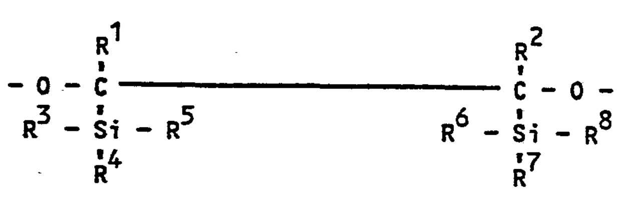

(II)

and having a molecular weight, determined as a number average, of 500 to 12,000, wherein

$R^1$ and $R^2$ denote optionally methoxy-, chlorine- or fluorine-substituted aryl radicals with 6 to 12 C atoms and

$R^3$ and $R^8$ independently of one another denote methyl, ethyl, phenyl or benzyl, characterised in that 1 mole of aryl silyl ketones of the formulae

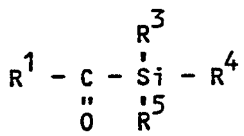

(III)

and

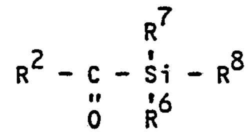

(IV)

and 0.5 gram atom of magnesium or calcium or 1 gram atom of lithium, sodium or potassium, are reacted, in an inert aprotic solvent at − 10 to + 70 °C — if necessary while cooling — with 1 mole of a monochloroorganosilane of the formula

$$R^9R^{10}R^{11}SiCl \qquad (V)$$

or with 0.4-0.8 mole of a dichloroorganosilane of the formula

$$R^9R^{10}SiCl_2 \qquad (VI)$$

or with 0.25-0.6 mole of a trichloroorganosilane of the formula

$$R^9SiCl_3 \qquad (VII)$$

or with 0.1-0.7 mole of tetrachlorosilane until the exothermic reaction has ceased, the reaction product is hydrolysed, the organic phase is separated off and the solvent is removed under a pressure of between 2.6 and 8 mbar, wherein

$R^9$ denotes methyl, ethyl, phenyl, benzyl, chloromethyl or A,

$R^{10}$ denotes hydroxyl, methoxy, ethoxy or $R^9$,

$R^{11}$ denotes hydroxyl or $R^9$ and

A denotes a radical of the formula

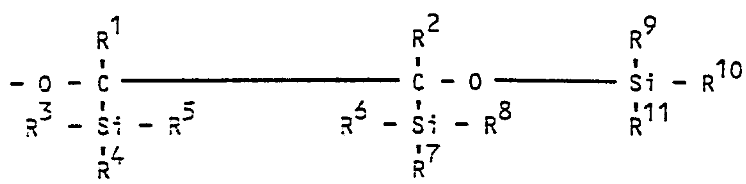

2. Process according to Claim 1, characterised in that the aryl radicals $R^1$ and $R^2$ are methyl-substituted.

3. Process according to Claim 1 and 2, characterised in that $R^1$ and $R^2$ denote phenyl, tolyl, p-tert.-butylphenyl, o- or p-chlorophenyl, 2,4-dichlorophenyl, naphthyl, biphenylyl or m-methoxyphenyl radicals.

4. Process according to Claim 1, characterised in that the reaction of the aryl silyl ketones III and IV is carried out at − 5 to + 50 °C.

5. Process according to Claim 1, characterised in that 0.5 to 0.6 mole of dichloroorganosilane VI or 0.3 to 0.4 mole of trichloroorganosilane VII are used per mole of the aryl silyl ketones III and IV.

6. Use of the silyl ethers obtainable according to the processes of Claims 1-5 as initiators for polymerisation reactions which can be initiated by radicals.

**Revendications** (pour les Etats contractants : BE, CH, DE, FR, GB, IT, LI, NL)

1. Ethers silyliques monomères et oligomères possédant la structure partielle

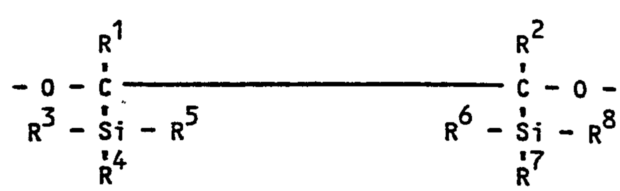

(II)

et un poids moléculaire, déterminé en moyenne en nombre, de 500 à 12 000, dans lesquels

$R^1$, $R^2$ représentent des groupes aryle en $C_6$-$C_{12}$, éventuellement substitués par des groupes méthoxy, le chlore ou le fluor, et

$R^3$ à $R^8$ représentent chacun, indépendamment les uns des autres, un groupe méthyle, éthyle, phényle ou benzyle, qu'on peut obtenir en faisant réagir 1 mole d'arylsilylcétones de formules

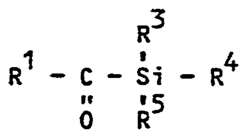

(III)

et

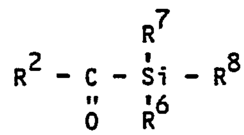

(IV)

et 0,5 atome-gramme de magnésium ou de calcium ou 1 atome-gramme de lithium, de sodium ou de potassium dans un solvant aprotonique inerte à une température de – 10 à + 70 °C — en refroidissant lorsque c'est nécessaire — avec 1 mole d'un monochloroorganosilane de formule

$R^9R^{10}R^{11}SiCl$ (V)

ou avec 0,4 à 0,8 mole d'un dichloroorganosilane de formule

$R^9R^{10}SiCl_2$ (VI)

ou avec 0,25 à 0,6 mole d'un trichloroorganosilane de formule

$R^9SiCl_3$ (VII)

ou avec 0,1 à 0,7 mole de tétrachlorosilane jusqu'à la fin de la réaction exothermique, puis en hydrolysant, en séparant la phase organique et en éliminant le solvant sous une pression de 2,6 à 8 mbar,

$R^9$ représentant un groupe méthyle, éthyle, phényle, benzyle, chlorométhyle ou A,

$R^{10}$ un groupe hydroxy, méthoxy, éthoxy ou $R^9$,

$R^{11}$ un groupe hydroxy ou $R^9$, et

A un reste de formule

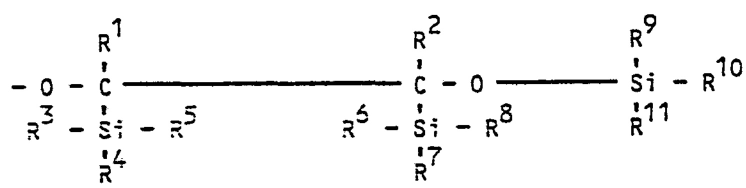

2. Ethers silyliques selon la revendication 1, caractérisés en ce que les groupes aryle $R^1$ et/ou $R^2$ sont substitués par des groupes méthyle.

3. Ethers silyliques selon les revendications 1 et 2, caractérisés en ce que $R^1$ et/ou $R^2$ représentent des groupes phényle, tolyle, p-tert-butylphényle, o- ou p-chlorophényle, 2,4-dichlorophényle, naphtyle, biphénylyle ou m-méthoxyphényle.

4. Ethers silyliques selon la revendication 1, caractérisés en ce que la réaction des arylsilylcétones III et IV est réalisée entre – 5 et + 50 °C.

5. Ethers silyliques selon la revendication 1, caractérisés en ce que, pour 1 mole des arylsilylcétones III et IV, on utilise 0,5 à 0,6 mole de dichloroorganosilane VI ou 0,3 à 0,4 mole de trichloroorganosilane VII.

6. Utilisation des éthers silyliques selon les revendications 1 à 5 en tant qu'inducteurs pour des réactions de polymérisation aptes à l'induction radicalaire.

**Revendications** (pour l'Etat contractant AT)

1. Procédé de préparation d'éthers silyliques monomères et oligomères ayant la structure partielle

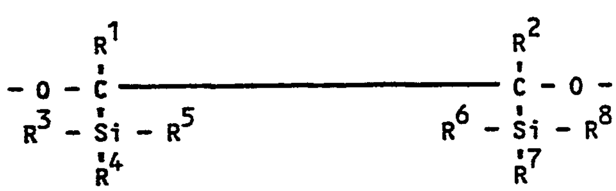

(II)

et un poids moléculaire, déterminé en moyenne en nombre, de 500 à 12 000, dans lesquels

$R^1$, $R^2$ représentent des groupes aryle en $C_6$-$C_{12}$, éventuellement substitués par des groupes méthoxy, le chlore ou le fluor, et

$R^3$ à $R^8$ représentent chacun, indépendamment les uns des autres, un groupe méthyle, éthyle, phényle ou benzyle, caractérisé en ce que l'on fait réagir 1 mole d'arylsilylcétones de formules

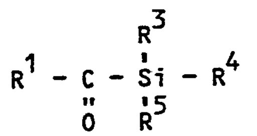

(III)

et

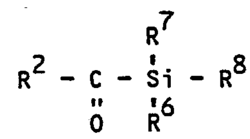

(IV)

et 0,5 atome-gramme de magnésium ou de calcium ou 1 atome-gramme de lithium, de sodium ou de potassium, dans un solvant aprotonique inerte, à une température de − 10 à + 70 °C — en refroidissant lorsque c'est nécessaire — avec 1 mole d'un monochloroorganosilane de formule

$$R^9R^{10}R^{11}SiCl \qquad (V)$$

ou avec 0,4 à 0,8 mole d'un dichloroorganosilane de formule

$$R^9R^{10}SiCl_2 \qquad (VI)$$

ou avec 0,25 à 0,6 mole d'un trichloroorganosilane de formule

$$R^9SiCl_3 \qquad (VII)$$

ou avec 0,1 à 0,7 mole de tétrachlorosilane jusqu'à ce que la réaction exothermique soit terminée, on hydrolyse, on sépare la phase organique et on élimine le solvant à une pression de 2,6 à 8 mbar,

$R^9$ représentant un groupe méthyle, éthyle, phényle, benzyle, chlorométhyle ou A,

$R^{10}$ un groupe hydroxy, méthoxy, éthoxy ou $R^9$,

$R^{11}$ un groupe hydroxy ou $R^9$, et

A un reste de formule

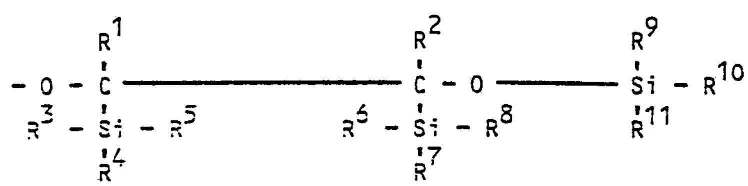

2. Procédé selon la revendication 1, caractérisé en ce que les groupes aryle $R^1$ et/ou $R^2$ sont substitués par des groupes méthyle.

3. Procédé selon les revendications 1 et 2, caractérisés en ce que $R^1$ et/ou $R^2$ représentent des groupes phényle, tolyle, p-tert-butylphényle, o- ou p-chlorophényle, 2,4-dichlorophényle, naphtyle, biphényle ou m-méthoxyphényle.

4. Procédé selon la revendication 1, caractérisé en ce que la réaction des arylsilylcétones III et IV est réalisée à une température de − 5 à + 50 °C.

5. Procédé selon la revendication 1, caractérisé en ce que, pour 1 mole des arylsilylcétones III et IV, on utilise 0,5 à 0,6 mole de dichloroorganosilane VI ou 0,3 à 0,4 mole de trichloroorganosilane VII.

6. Utilisation des éthers silyliques obtenus par les procédés des revendications 1 à 5 en tant qu'inducteurs pour des réactions de polymérisation aptes à l'induction radicalaire.